# EUROPÄISCHE PATENTSCHRIFT

(11) **EP 4 541 611 B1**
(45) Veröffentlichungstag und Bekanntmachung des Hinweises auf die Patenterteilung: **23.09.2026**
(21) Anmeldenummer: 24204235.6
(22) Anmeldetag: 02.10.2024
(51) Int. Cl.: B60G 21/05

(54) **VERBUNDLENKERACHSE**
TWIST BEAM AXLE
ESSIEU À TRAVERSE DÉFORMABLE

(30) Priorität: 12.10.2023 DE 102023127932
(43) Veröffentlichungstag der Anmeldung: 23.04.2025
(73) Patentinhaber: Benteler Automobiltechnik GmbH, 33102 Paderborn (DE)
(72) Erfinder: Claußen, Lars, 33175 Bad Lippspringe (DE); Hertel, Olaf, 38108 Braunschweig (DE); Rieckmann, Andreas, 38100 Braunschweig (DE); Schultz, Erik, 33102 Paderborn (DE); Schmidt-Beljawski, Eduard, 29525 Uelzen (DE); Schneider, Klaus, 34431 Marsberg (DE)
(74) Vertreter: Ksoll, Peter

(56) Entgegenhaltungen:
- WO-A1-2014/136261
- WO-A1-2021/170348
- "Praxiswissen Schweißtechnik : Werkstoffe, Prozesse, Fertigung", 1 January 2013, SPRINGER VIEWEG, article FAHRENWALDT HANS J., pages: 499 - 499, XP093246871
- "DUBBEL - Taschenbuch Für Den Maschinenbau", 31 December 1997, SPRINGER BERLIN / HEIDELBERG, article BEITZ WOLFGANG: "DUBBEL - Taschenbuch Für Den Maschinenbau", XP093246916

## Beschreibung

Die Erfindung betrifft eine Verbundlenkerachse für Kraftfahrzeuge gemäß den Merkmalen im Oberbegriff von Anspruch 1.

Eine Verbundlenkerachse weist zwei biege- und verdrehsteife Seitenarme und ein sich zwischen diesen quer erstreckendes Torsionsprofil auf, welches die Seitenarme torsionsweich verbindet. Eine Verbundlenkerachse zeichnet sich durch eine gute Seitenführung bei Kurvenfahrt sowie ihren günstigen Raumbedarf und geringes Gewicht aus.

Eine Verbundlenkerachse mit einem im Querschnitt V-förmigen Torsionsprofil ist beispielsweise durch die DE 27 359 39 C2 oder die EP 0 916 530 B1 bekannt. Das Torsionsprofil ist mit den Seitenarmen verschweißt.

Aufgrund der im Betrieb wirkenden hohen dynamischen und auch statischen Kräften, insbesondere von Längskräften, liegen hohe Belastungen auf der Schweißnaht zwischen dem Torsionsprofil und den Seitenarmen. Der Festigkeit der Schweißnähte und der Schweißnahtqualität kommt daher besondere Bedeutung zu. Die Einbrandtiefe einer Schweißnaht steht dabei in engem Zusammenhang mit der Fügefestigkeit.

Häufig haben das Torsionsprofil und die Seitenarme unterschiedliche Wandstärken. Üblicherweise weist das Torsionsprofil eine größere Wandstärke auf als die Seitenarme. Bei einer schweißtechnischen Fügung mittels Stumpfstoß hat sich gezeigt, dass es wegen des Wandstärkenunterschieds zwischen Torsionsprofil und Seitenarm schwer ist, einen hohen Einbrand der Schweißnaht in das Torsionsprofil zu erhalten ohne einen Durchbrand am Seitenarm zu erzeugen. Durch den geringeren Einbrand kann es zu einer Reduzierung der Lebensdauer einer Verbundlenkerachse kommen.

Aus der WO 2014/136261 A1 geht eine Verbundlenkerachse entsprechend dem Oberbegriff des Anspruchs 1 hervor, welche zwei Seitenarme und ein Torsionsprofil aufweist. Das Torsionsprofil weist zwei Seitenschenkel auf, die über einen Scheitelabschnitt verbunden sind. Das Torsionsprofil besitzt eine Wand mit einer Wandstärke und die Seitenarme besitzen jeweils eine Wand mit einer Wandstärke, wobei die Wandstärke der Wand des Torsionsprofils größer ist als die Wandstärke der Wand eines Seitenarmes. Das Torsionsprofil besitzt an jedem Endabschnitt eine Fügefläche. Ebenso weisen die Seitenarme jeweils eine Fügefläche auf. Das Torsionsprofil und die Seitenarme sind an ihren einander zugewandten Fügeflächen jeweils durch eine Schweißnaht verbunden.

Durch die WO 2021/170348 A1 zählt ein Mehrpunktlenker für ein Fahrwerk eines Kraftfahrzeugs zum Stand der Technik. Der Mehrpunktlenker weist zumindest ein paar von gradlinig ausgebildeten Profilabschnitten auf, die über ihre Längserstreckung parallel zueinander beabstandet und zugleich zwischen ihren Enden voneinander entkoppelt sind. Die Profilabschnitte besitzen im Querschnitt jeweils einen offenen, zumindest im Wesentlichen C-förmig oder U-förmig ausgebildeten Profilquerschnitt. Jedes Ende der Profilquerschnitte ist über eine Schweißverbindung an eine hohlzylindrische Gelenkaufnahme angebunden, wobei die Enden der Profilabschnitte dabei mit zylindermantelförmigen Außenumfangsflächen der hohlzylindrischen Gelenkaufnahmen zumindest im Wesentlichen T-förmig aufeinandertreffen. Die Schweißverbindung ist als Kehlnaht mit einem keilförmigen Nahtquerschnitt ausgebildet.

Zum technologischen Hintergrund der Schweißtechnik und der Ausbildung von Schweißnähten zählen die Offenbarungen in Fahrenwaldt Hans J.: In: "Praxiswissen Schweißtechnik: Werkstoffe, Prozesse, Fertigung", 1. Januar 2013, Springer Vieweg, XP093246871, Seite 499 sowie Beitz Wolfgang: "DUBBEL - Taschenbuch Für Den Maschinenbau" In: "DUBBEL - Taschenbuch Für Den Maschinenbau", 31. Dezember 1997, Springer Berlin / Heidelberg, XP093246916.

Der Erfindung liegt ausgehend vom Stand der Technik die Aufgabe zugrunde, eine Verbundlenkerachse im Belastungsverhalten zu verbessern und in der Lebensdauer zu steigern ohne deren Gewicht nachteilig zu erhöhen.

Die Lösung dieser Aufgabe besteht nach der Erfindung in einer Verbundlenkerachse gemäß den Merkmalen von Anspruch 1.

Vorteilhafte Ausgestaltungen und Weiterbildungen der erfindungsgemäßen Verbundlenkerachse sind Gegenstand der abhängigen Ansprüche.

Eine Verbundlenkerachse weist zwei Seitenarme und ein Torsionsprofil auf, welches die beiden Seitenarme torsionsweich verbindet. Das Torsionsprofil ist mit den Seitenarmen jeweils durch eine Schweißverbindung verbunden. Das Torsionsprofil weist eine Wand mit einer Wandstärke auf und die Seitenarme weisen jeweils eine Wand mit einer Wandstärke auf. Die Wandstärke der Wand des Torsionsprofils ist zumindest im Bereich der Schweißverbindung größer als die Wandstärke der Wand eines Seitenarms im Bereich der Schweißverbindung. Das Torsionsprofil weist an jedem Endabschnitt eine Fügefläche auf. Auch jeder Seitenarm weist eine Fügefläche auf. Das Torsionsprofil und die Seitenarme sind an ihren einander zugewandten Fügeflächen jeweils durch eine Schweißnaht verbunden.

Die Fügefläche weist an den Endabschnitten des Torsionsprofils jeweils eine Schräge auf. Durch die Schräge verjüngt sich der Endabschnitt in Richtung zum stirnseitigen Ende des Torsionsprofils. Die Endabschnitte des Torsionsprofils erhalten eine auf die schweißtechnische Fügung abgestimmte Nahtvorbereitung. Die Fügefläche wird durch den Abschnitt der Schräge verlängert und verjüngt sich zum Ende des Endabschnitts hin. Durch die Schräge in der Fügefläche des Endabschnitts erhält der Fügespalt zwischen der Fügefläche am Endabschnitt des Torsionsprofils und der Fügefläche an einem Seitenarm eine V-förmige Konfiguration. Der Fügespalt zwischen dem Endabschnitt des Torsionsprofils und dem Seitenarm ist V-förmig konfiguriert. Durch die Schräge und den V-förmigen Fügespalt ist ein hoher Einbrand im Torsionsprofil möglich. Als Einbrand bezeichnet man die Tiefe der aufgeschmolzenen Zone im Grundwerkstoff, hier dem Stahlwerkstoff des Torsionsprofils im Endabschnitt.

Der Einbrand liegt üblicherweise zwischen 2 % bis 10 %. Die Erfindung lässt auch höhere Einbrandgrade erwarten. Die Flankeneinbrandlänge, also die Länge des aufgeschmolzenen Bereiches, in dem der Schweißzusatzwerkstoff eine Verbindung mit dem Grundmaterial eingegangen ist, beträgt 70 % bis 90 % der Wandstärke der Bauteile, insbesondere der Wandstärke des Torsionsprofils.

Die Erfindung schafft eine Verbundlenkerachse mit höherer Lebensdauer ohne eine Erhöhung des Bauteilgewichts. Die fahrdynamisch vorteilhaften Eigenschaften und damit die Leistungsfähigkeit mit einem Höchstmaß an Fahrstabilität und Komfort bleiben erhalten.

Das Torsionsprofil und die Seitenarme sind in einem Winkel quer zueinander ausgerichtet, insbesondere stößt das Torsionsprofil mit einem T-Stoß jeweils an einen Seitenarm.

Eine vorteilhafte Ausgestaltung sieht vor, dass der Endabschnitt des Torsionsprofils stirnseitig eine Stoßfläche aufweist, wobei die Stoßfläche im Wesentlichen rechtwinklig zur Längsachse der Wand des Torsionsprofils verläuft. Die stirnseitige Stoßfläche ist Bestandteil der Fügefläche am Endabschnitt des Torsionsprofils. Mit der Stoßfläche stößt das Torsionsprofil stumpf gegen die Fügefläche am Seitenarm.

Die Schräge läuft in die Stirnseite des Endabschnitts aus. An die Schräge schließt sich die Stoßfläche an.

Die Stoßfläche ist deutlich kürzer als die Länge der Schräge. Die Stoßfläche erstreckt sich parallel zur Fügefläche an einem Seitenarm.

Besonders vorteilhaft ist die Schräge durch spanende Bearbeitung erzeugt. Zur Herstellung der Verbundlenkerachse kann ein Torsionsprofil bereitgestellt werden, welches seinen bestimmungsgemäßen Querschnitt aufweist, also beispielsweise einen U-, V- oder einen runden Querschnitt besitzt. Die Endabschnitte werden dann spanend bearbeitet und die Schräge erzeugt.

Insbesondere ist die Schräge in den Bereichen der Stoßkante vorgesehen, in welchen die größten Belastungen durch äußere Kräfte auftreten. Bei dem Torsionsprofil der Verbundlenkerachse ist die Schräge insbesondere an den Fügeflächen der Schenkel des Torsionsprofils vorgesehen. Bei einem im Querschnitt U- oder V-förmigen Torsionsprofil ist die Schräge innenseitig des Querschnitts auf der Innenseite des Torsionsprofils oder außenseitig des Querschnitts auf der Außenseite des Torsionsprofils entlang der Schenkel angeordnet. Die Schräge ist auf einem Teilabschnitt der Länge eines Schenkels des Torsionsprofils vorgesehen. Erfindungsgemäß ist die Schräge im unteren Längenabschnitt der Länge des Schenkels vorgesehen und erstreckt sich über 30 % bis maximal 75 %, insbesondere ca. 50 % der Länge eines Schenkels. Die tangentiale Länge der Schräge ist im Querschnitt des Torsionsprofils in Richtung des Umfangs des Torsionsprofils gemessen und kann sich über die gesamte Umfangslänge der Stirnseite des Torsionsprofils erstrecken. Die tangentiale Länge der Schräge kann aber auch nur über die Länge eines Schenkels verlaufen oder auf einem Teilabschnitt der Länge eines Schenkels eines Torsionsprofils vorgesehen sein.

In den Bereichen bzw. Abschnitten der Fügefläche, in welchen keinen Schräge vorgesehen ist, stößt die Fügefläche des Torsionsprofils an die Fügefläche eines Seitenarms.

Die Fügefläche am Endabschnitt des Torsionsprofils wird zur Herstellung der Schräge spanabhebend bearbeitet. Hierbei wird Material von Endabschnitt entfernt. Dies kann beispielsweise durch Fräsen, Drehen oder Schleifen erfolgen.

Insbesondere wird ein keilförmiger Kantenbereich am Ende jeweils eines Endabschnitts eines Torsionsprofils entfernt und die Schräge in der Fügefläche erzeugt.

Möglich ist auch, dass zunächst die Stirnseiten einer Stahlblechplatine bearbeitet und mit einer Schräge versehen werden, wonach die Platine dann zum Torsionsprofil umgeformt und mit seinem bestimmungsgemäßen Querschnitt versehen wird.

Die Schräge verläuft in einem Winkel zur Längsachse der Wand des Torsionsprofils, vorzugsweise liegt der Winkel in einem Bereich zwischen 25° bis 60°. Für die Praxis vorteilhaft wird insbesondere ein Winkel im Bereich von 30° bis 45° angesehen.

Die Schräge weist eine axiale Länge auf, wobei die axiale Länge größer ist als die Wandstärke der Wand des Torsionsprofils im Endabschnitt. Insbesondere ist das Verhältnis der axialen Länge der Schräge zur Wandstärke der Wand des Torsionsprofils zwischen 1:1 und 2:1 bemessen. Die axiale Länge der Schräge ist in Richtung der Längsachse der Wand des Torsionsprofils gemessen.

Die Stoßfläche an der Stirnseite des Endabschnitts eines Endprofils weist eine Breite auf, wobei die Breite rechtwinklig zur Längsachse der Wand des Torsionsprofils gemessen ist. Die Breite der Stoßfläche ist deutlich kleiner als die Wandstärke der Wand des Torsionsprofils, insbesondere ist die Wandstärke der Wand des Torsionsprofils 3mal bis 6mal so groß wie die Breite der Stoßfläche. Dementsprechend ist das Verhältnis der Breite der Stoßfläche zur Wandstärke der Wand des Torsionsprofils im Endabschnitt zwischen 1:3 und 1:6 bemessen.

Zur Herstellung der Verbundlenkerachse werden zwei Seitenarme und ein Torsionsprofil bereitgestellt. Die Bauteile der Verbundlenkerachse bestehen aus Stahl. Das Torsionsprofil und die Seitenarme weisen zumindest im Bereich der schweißtechnischen Fügung unterschiedliche Wandstärken auf. Das heißt insbesondere, dass die Wandstärke des Torsionsprofils stärker ist als die Wandstärke eines Seitenarms. Das Torsionsprofil und die Seitenarme werden in einem Winkel zueinander angeordnet und durch eine Schweißnaht verbunden.

Zur Herstellung des Torsionsprofils wird eine Ausgangsplatine bereitgestellt, welche eine Wand mit einer Wandstärke aufweist. Am Endabschnitt der Ausgangsplatine wird eine Schräge ausgebildet und stirnseitig am Endabschnitt eine Stoßfläche erzeugt.

Die Ausgangsplatine wird zum Torsionsprofil umgeformt. Bei diesem Umformschritt erhält die Ausgangsplatine zumindest bereichsweise insbesondere über ihre Länge eine Querschnittskonfiguration des Torsionsprofils. Hierbei wird die Ausgangsplatine insbesondere um ihre Längsachse umgeformt und mit dem Querschnitt des Torsionsprofils versehen, also beispielsweise im Querschnitt U- oder V-förmig profiliert.

Des Weiteren werden die beiden Seitenarme bereitgestellt. Die Seitenarme weisen eine Wand mit einer Wandstärke auf, welche von der Wandstärke der Wand des Torsionsprofils verschieden ist.

Das Torsionsprofil und die Seitenarme werden in einem Winkel relativ zueinander ausgerichtet, so dass die Fügefläche des Torsionsprofils und die Fügeflächen der Seitenarme einander zugewandt sind. Danach erfolgt die stoffschlüssige Fügung von Torsionsprofil und Seitenarmen durch eine Schweißnaht an den Fügeflächen.

Die Erfindung ist nachfolgend anhand von Zeichnungen näher erläutert. Es zeigen:
- Figur 1: technisch schematisiert und vereinfacht einen Ausschnitt aus der Wand eines Torsionsprofils und einen Ausschnitt aus der Wand eines Seitenarmes vor einer schweißtechnischen Fügung;
- Figur 2: die Bauteile entsprechend der Darstellung der Figur 1 nach der schweißtechnischen Fügung;
- Figur 3: eine Verbundlenkerachse in einer perspektivischen Darstellung;
- Figur 4: eine Ansicht auf die Stirnseite des Endabschnitts eines Torsionsprofils und
- Figur 5: eine Ansicht auf die Stirnseite des Endabschnitts einer weiteren Ausführungsform eines Torsionsprofils.

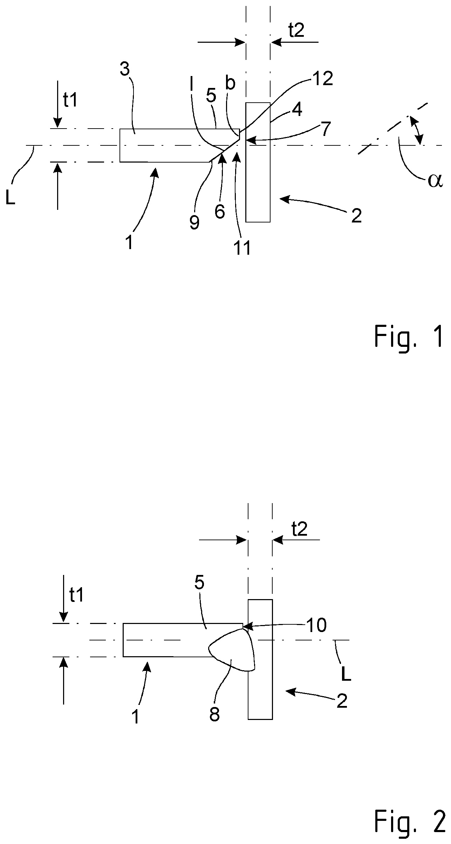

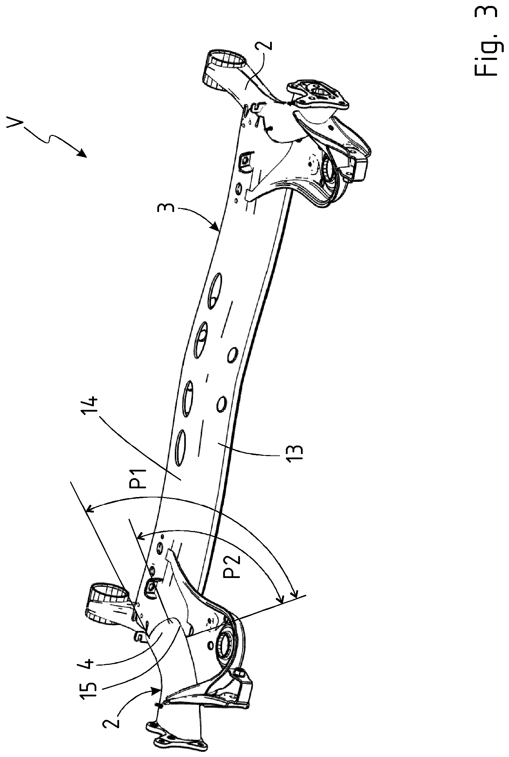

Die Figuren 1 und 2 zeigen Ausschnitte von Bauteilen einer Verbundlenkerachse für ein Kraftfahrzeug. Eine Verbundlenkerachse V in einer Perspektive ist in der Figur 3 dargestellt. Eine Verbundlenkerachse V umfasst im Wesentlichen zwei radführende Seitenarme 2 und ein die beiden Seitenarme 2 verbindendes Torsionsprofil 1. Das Torsionsprofil ist exemplarisch mit dem Bezugszeichen 1 und ein Seitenarm mit Bezugszeichen 2 bezeichnet.

Das Torsionsprofil 1 weist eine Wand 3 mit einer Wandstärke t1 auf. Der bzw. die Seitenarme 2 weisen jeweils eine Wand 4 mit einer Wandstärke t2 auf. Die Wandstärke t1 der Wand 3 des Torsionsprofils 1 ist größer als die Wandstärke t2 der Wand 4 des Seitenarm 2.

Das Torsionsprofil 1 weist an jedem Endabschnitt 5 eine Fügefläche 6 auf. Die Seitenarme 2 weisen ebenfalls jeweils eine Fügefläche 7 auf. Das Torsionsprofil 1 und die Seitenarme 2 sind an ihren einander zugewandten Fügeflächen 6, 7 jeweils durch eine Schweißnaht 8 verbunden. Die Schweißverbindung mit der Schweißnaht 8 ist in der Figur 2 dargestellt.

Die Fügefläche 6 am Endabschnitt 5 des Torsionsprofils 1 weist eine Schräge 9 auf. Die Schräge 9 ist durch spanende Bearbeitung des Endabschnitts 5 erzeugt. Durch die Schräge 9 verjüngt sich der Endabschnitt 5 in Richtung zur Stirnseite 10 des Torsionsprofils 1 hin.

Zur Herstellung der Schweißverbindung werden das Torsionsprofil 1 und der bzw. die Seitenarme 2 zueinander positioniert. Dies zeigt die Darstellung der Figur 1. Die Fügeflächen 6, 7 sind einander zugewandt. Zwischen der Fügefläche 5 des Torsionsprofils 1 und der Fügefläche 6 eines Seitenarms 2 wird ein V-förmiger Fügespalt 11 gebildet. Die stoffschlüssige Verbindung erfolgt über eine Schweißnaht, wie in der Figur 2 dargestellt. Durch die Schräge 9 wird die Schweißnaht 8 deutlich effizienter, insbesondere kann ein bauteiloptimierter Einbrand im Torsionsprofil 1 erreicht werden.

Der Endabschnitt 5 des Torsionsprofils 1 weist stirnseitig eine Stoßfläche 12 auf. Die Stoßfläche 12 verläuft im Wesentlichen rechtwinklig zur Längsachse L der Wand 3 des Torsionsprofils 1. Die Stoßfläche 12 ist parallel zur Fügefläche 6 eines Seitenarms 2 orientiert. Im Tiefsten des V-förmigen Fügespalts 11 schließt sich ein parallel, zwischen der Stoßfläche 12 und der Fügefläche 6 ausgebildeter Spaltabschnitt an.

Durch die Schräge 9 verjüngt sich der Endabschnitt 5 in einem spitzen Winkel α zur Stirnseite 10 hin. An der Stirnseite 10 endet die Schräge 9. Die Stoßfläche 12 schließt sich mit einem stumpfen Winkel an die Schräge 9 an.

Die Schräge 9 verläuft in einem Winkel α zur Längsachse L der Wand 3 des Torsionsprofils 1. Im dargestellten Ausführungsbeispiel beträgt der Winkel α ca. 30 °.

Die Schräge weist eine axiale Länge l auf. Die axiale Länge l ist größer als die Wandstärke t1 der Wand 3 des Torsionsprofils 1. Das Verhältnis der axialen Länge l der Schräge 9 zur Wandstärke t1 der Wand 3 des Torsionsprofils 1 kann zwischen 1:1 und 2:1 bemessen sein.

Die Stoßfläche 12 weist im Vergleich zur Wandstärke t1 der Wand 3 des Torsionsprofils 1 eine deutlich geringere Breite b auf. Die Breite b der Stoßfläche 12 ist rechtwinklig zur Längsachse L der Wand 3 des Torsionsprofils 1 gemessen. Das Verhältnis der Breite b der Stoßfläche 12 zur Wandstärke t1 der Wand 3 des Torsionsprofils 1 kann zwischen 1:3 und 1:6 bemessen sein. Bei einer besonders vorteilhaften praktischen Ausführungsform der erfindungsgemäßen Verbundlenkerachse beträgt die Breite b der Stoßfläche 12 1 mm bis 3 mm, jeweils einschließlich.

Durch die Nahtvorbereitung und die Ausbildung der Schräge 9 in der Fügefläche 6 am Endabschnitt 5 des Torsionsprofils 1 sowie die V-förmige Konfiguration des Fügespalts 11 entsteht eine Schweißverbindung zwischen Torsionsprofil 1 und Seitenarm 2 mit einer anforderungsgerechten Qualität. Der Einbrand der Schweißnaht 8 am Torsionsprofil 1 kann deutlich erhöht werden, ohne dass es zu einem Durchbrand am Seitenarm 2 kommt. Die Schweißnaht 8 genügt höchsten Festigkeitsanforderungen mit der Folge, dass die Lebensdauer der Verbundlenkerachse erhöht werden kann, ohne eine nachteilige Gewichtserhöhung.

Die Figur 3 zeigt eine Verbundlenkerachse V. Das Torsionsprofil 1 stößt mit einem T-Stoß jeweils an einen Seitenarm 2. Das Torsionsprofil 1 weist eine Wand 3 (siehe hierzu Figuren 1 und 2) auf und hat ein U-förmiges Querschnittsprofil mit zwei Seitenschenkel 13, die über einen Scheitelabschnitt 14 verbunden sind. Mit dem Endabschnitt 5 stößt das Torsionsprofil 1 an die Wand 4 eines Seitenarms 2. Die Fügefläche 6 am Endabschnitt 5 des Torsionsprofils 1 ist an die Außenkontur des Seitenarms 2 angepasst und verläuft bogenförmig gekrümmt.

Durch den Pfeil P1 ist schematisch die tangentiale Länge eines Seitenschenkels 13 verdeutlicht, mit welchen der Endabschnitt 5 des Torsionsprofils 1 am Außenumfang des Seitenarms 2 anstößt. Dieser beträgt, bezogen auf den Umfang des im Querschnitt runden Seitenarms 2, etwa 180° +/- 15°.

Durch den Pfeil P2 ist die Länge des Längenabschnitts 15 verdeutlicht, in welchem die Schräge 9 auf der Innenseite eines Schenkels 13 des Torsionsprofils 1 vorgesehen ist. Die Schräge 9 ist im unteren Längenabschnitt 15 des Seitenschenkels 13 vorgesehen. Die Schräge 9 erstreckt sich über 30 % bis 75 %, insbesondere ca. der Hälfte der Länge eines Seitenschenkels 13. Bezogen auf den Querschnitt eines Seitenarms 2 erstreckt sich die Schräge 9 auf einem Umfangsabschnitt von ca. 90° +/-15 °. Die Schräge 9 ist vom freien Schenkelende ausgehend im unteren Längenabschnitt 15 eines Seitenschenkels 13 vorgesehen.

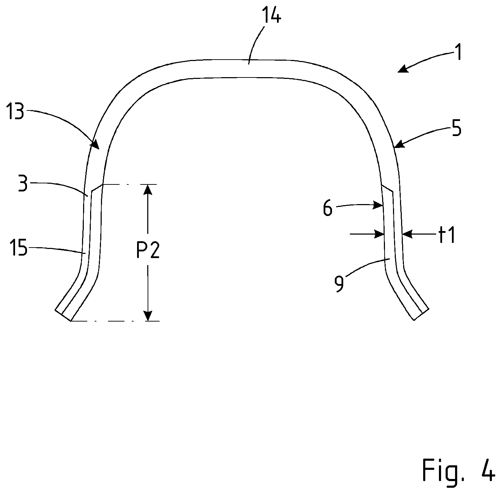

Die Figur 4 zeigt eine Stirnansicht auf die Fügefläche 6 an einem Endabschnitt 5 eines Torsionsprofils 1. Das Torsionsprofil 1 weist eine Wand 3 mit einer Wandstärke t1 auf. In der Fügefläche 6 am Endabschnitt 5 des Torsionsprofils 1 ist eine Schräge 9 vorgesehen. Die Schräge 9 verläuft innenseitig der Seitenschenkel 13 des Torsionsprofils 1.

Die Schräge 9 ist in dem vom freien Schenkelende ausgehenden unteren Längenabschnitt 15 des Seitenschenkels 13 vorgesehen. Die tangentiale Länge des Längenabschnitts 15 ist durch den Pfeil P2 gekennzeichnet. Im dargestellten Ausführungsbeispiel erstreckt sich die Schräge 9 etwa über die Hälfte der Länge eines Seitenschenkels 13.

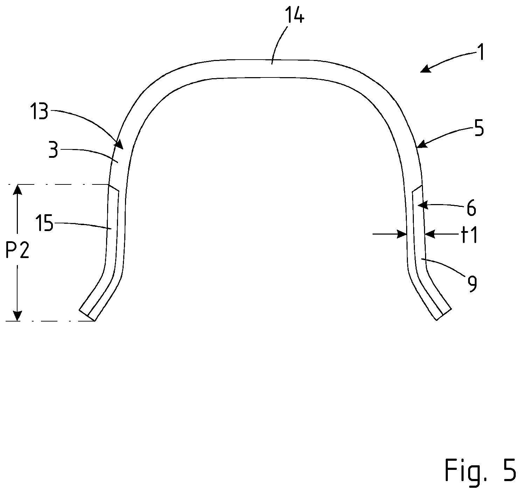

Die Figur 5 zeigt eine Stirnansicht auf die Fügefläche 6 in einer alternativen Ausgestaltung am Endabschnitt 5 eines Torsionsprofils 1. Anders als bei der Ausführungsform gemäß der Figur 4 ist hier die Schräge 9 außenseitig der Seitenschenkel 13 des Torsionsprofils angeordnet. Die Schräge 9 ist wie auch bei den anderen Ausführungsformen durch spanende Bearbeitung erzeugt. Die Schräge 9 erstreckt sich in einem vom freien Schenkelende ausgehenden unteren Längenabschnitt 15 eines jeden Seitenschenkels 13. Ansonsten entspricht die Ausführungsform derjenigen der Figur 4 und die zugehörige Beschreibung.

### Bezugszeichen:

- 1 -: Torsionsprofil
- 2 -: Seitenarm
- 3 -: Wand des Torsionsprofils
- 4 -: Wand des Seitenarms
- 5 -: Endabschnitt
- 6 -: Fügefläche
- 7 -: Fügefläche
- 8 -: Schweißnaht
- 9 -: Schräge
- 10 -: Stirnseite
- 11 -: Fügespalt
- 12 -: Stoßfläche
- 13 -: Seitenschenkel
- 14 -: Scheitelabschnitt
- 15 -: Längenabschnitt v. 13

- b -: Breite
- L -: Längsachse
- l -: Länge
- t1 -: Wandstärke zu 3
- t2 -: Wandstärke zu 4
- α -: Winkel
- P1 -: Pfeil
- P2 -: Pfeil

## Patentansprüche

1. Verbundlenkerachse, welche zwei Seitenarme (2) und ein Torsionsprofil (1) aufweist, wobei das Torsionsprofil (1) eine Wand (3) mit einer Wandstärke (t1) aufweist und die Seitenarme (2) jeweils eine Wand (4) mit einer Wandstärke (t2) aufweisen, wobei die Wandstärke (t1) der Wand (3) des Torsionsprofils (1) größer ist als die Wandstärke (t2) der Wand (4) eines Seitenarms (2) und das Torsionsprofil (1) an jedem Endabschnitt (5) eine Fügefläche (6) aufweist und die Seitenarme (2) jeweils eine Fügefläche (7) aufweisen, wobei das Torsionsprofil (1) und die Seitenarme (2) an ihren einander zugewandten Fügeflächen (6, 7) jeweils durch eine Schweißnaht (8) verbunden sind, und das Torsionsprofil (1) zwei Seitenschenkel (13) aufweist, die über einen Scheitelabschnitt (14) verbunden sind, **dadurch gekennzeichnet, dass** die Fügefläche (6) am Endabschnitt (5) des Torsionsprofils (1) eine Schräge (9) aufweist, wobei die Schräge (9) im unteren Längenabschnitt (15) eines Seitenschenkels (13) vorgesehen ist und sich über 30 % bis maximal 75 % der Länge eines Seitenschenkels (13) erstreckt.

2. Verbundlenkerachse nach Anspruch 1, **dadurch gekennzeichnet , dass** der Endabschnitt (5) des Torsionsprofils (1) stirnseitig eine Stoßfläche (12) aufweist, wobei die Stoßfläche (12) im Wesentlichen rechtwinklig zur Längsachse (L) der Wand (3) des Torsionsprofils (1) verläuft.

3. Verbundlenkerachse nach 2, **dadurch gekennzeichnet, dass** sich die Stoßfläche (12) an die Schräge (9) anschließt.

4. Verbundlenkerachse nach einem der Ansprüche 1 bis 3, **dadurch gekennzeichnet, dass** die Schräge (9) durch spanende Bearbeitung erzeugt ist.

5. Verbundlenkerachse nach einem der Ansprüche 1 bis 4, **dadurch gekennzeichnet, dass** die Schräge (9) in einem Winkel (α) von 25° bis 60°, insbesondere von. 30° bis 45°, zur Längsachse (L) der Wand (3) des Torsionsprofils (1) verläuft.

6. Verbundlenkerachse nach einem der Ansprüche 1 bis 5, **dadurch gekennzeichnet, dass** die Schräge (9) eine axiale Länge (l) aufweist und das Verhältnis der axialen Länge (l) der Schräge (9) zur Wandstärke (t1) der Wand (3) des Torsionsprofils (1) zwischen 1:1 und 2:1 bemessen ist.

7. Verbundlenkerachse nach einem der Ansprüche 2 bis 6, **dadurch gekennzeichnet, dass** die Stoßfläche (12) eine rechtwinklig zur Längsachse (L) der Wand (3) des Torsionsprofils (1) gemessene Breite (b) aufweist und das Verhältnis der Breite (b) der Stoßfläche (12) zur Wandstärke (t1) der Wand (3) des Torsionsprofils (1) zwischen 1:3 und 1:6 bemessen ist.

8. Verbundlenkerachse nach einem der Ansprüche 1 bis 7, **dadurch gekennzeichnet, dass** die Schräge (9) in einem vom freien Schenkelende eines Schenkels (13) des Torsionsprofils (1) ausgehenden Längenabschnitt (15) vorgesehen ist.

## Claims

1. Torsion-beam rear axle comprising two side arms (2) and a torsion profile (1), wherein the torsion profile (1) has a wall (3) with a wall thickness (t1), and the side arms (2) each have a wall (4) with a wall thickness (t2), wherein the wall thickness (t1) of the wall (3) of the torsion profile (1) is greater than the wall thickness (t2) of the wall (4) of a side arm (2), and the torsion profile (1) has a joining surface (6) at each end section (5), and the side arms (2) each have a joining surface (7), wherein the torsion profile (1) and the side arms (2) are each connected at their mutually facing joining surfaces (6, 7) by a weld seam (8), and the torsion profile (1) has two side legs (13) which are connected by a vertex section (14), **characterized in that** the joining surface (6) at the end section (5) of the torsion profile (1) has an inclined portion (9), wherein the inclined portion (9) is provided in the lower longitudinal section (15) of a side leg (13) and extends over 30% to a maximum of 75% of the length of a side leg (13).

2. Torsion-beam rear axle according to claim 1, **characterized in that** the end section (5) of the torsion profile (1) has an end-face abutment surface (12), wherein the abutment surface (12) extends substantially at right angles to the longitudinal axis (L) of the wall (3) of the torsion profile (1).

3. Torsion-beam rear axle according to claim 2, **characterized in that** the abutment surface (12) adjoins the inclined portion (9).

4. Torsion-beam rear axle according to any one of claims 1 to 3, **characterized in that** the inclined portion (9) is produced by machining.

5. Torsion-beam rear axle according to any one of claims 1 to 4, **characterized in that** the inclined portion (9) extends at an angle (α) of 25° to 60°, in particular 30° to 45°, relative to the longitudinal axis (L) of the wall (3) of the torsion profile (1).

6. Torsion-beam rear axle according to any one of claims 1 to 5, **characterized in that** the inclined portion (9) has an axial length (I), and the ratio of the axial length (l) of the inclined portion (9) to the wall thickness (t1) of the wall (3) of the torsion profile (1) is between 1:1 and 2:1.

7. Torsion-beam rear axle according to any one of claims 2 to 6, **characterized in that** the abutment surface (12) has a width (b) measured perpendicular to the longitudinal axis (L) of the wall (3) of the torsion profile (1), and the ratio of the width (b) of the abutment surface (12) to the wall thickness (t1) of the wall (3) of the torsion profile (1) is between 1:3 and 1:6.

8. Torsion-beam rear axle according to any one of claims 1 to 7, **characterized in that** the inclined portion (9) is provided in a longitudinal section (15) extending from the free leg end of a leg (13) of the torsion profile (1).

## Revendications

1. Essieu arrière à traverse de torsion comprenant deux bras latéraux (2) et un profilé de torsion (1), le profilé de torsion (1) présentant une paroi (3) d'une épaisseur de paroi (t1), et les bras latéraux (2) présentant chacun une paroi (4) d'une épaisseur de paroi (t2), l'épaisseur de paroi (t1) de la paroi (3) du profilé de torsion (1) étant supérieure à l'épaisseur de paroi (t2) de la paroi (4) d'un bras latéral (2), et le profilé de torsion (1) présentant, au niveau de chaque section d'extrémité (5), une surface d'assemblage (6), et les bras latéraux (2) présentant chacun une surface d'assemblage (7), le profilé de torsion (1) et les bras latéraux (2) étant respectivement reliés, au niveau de leurs surfaces d'assemblage (6, 7) se faisant face, par un cordon de soudure (8), et le profilé de torsion (1) présentant deux branches latérales (13) reliées entre elles par une section de sommet (14), **caractérisé en ce que** la surface d'assemblage (6) au niveau de la section d'extrémité (5) du profilé de torsion (1) présente une partie inclinée (9), la partie inclinée (9) étant prévue dans la section longitudinale inférieure (15) d'une branche latérale (13) et s'étendant sur 30 % à au maximum 75 % de la longueur d'une branche latérale (13).

2. Essieu arrière à traverse de torsion selon la revendication 1, **caractérisé en ce que** la section d'extrémité (5) du profilé de torsion (1) présente, sur sa face d'extrémité, une surface de butée (12), la surface de butée (12) s'étendant essentiellement perpendiculairement à l'axe longitudinal (L) de la paroi (3) du profilé de torsion (1).

3. Essieu arrière à traverse de torsion selon la revendication 2, **caractérisé en ce que** la surface de butée (12) est adjacente à la partie inclinée (9).

4. Essieu arrière à traverse de torsion selon l'une quelconque des revendications 1 à 3, **caractérisé en ce que** la partie inclinée (9) est réalisée par usinage.

5. Essieu arrière à traverse de torsion selon l'une quelconque des revendications 1 à 4, **caractérisé en ce que** la partie inclinée (9) s'étend selon un angle (α) de 25° à 60°, notamment de 30° à 45°, par rapport à l'axe longitudinal (L) de la paroi (3) du profilé de torsion (1).

6. Essieu arrière à traverse de torsion selon l'une quelconque des revendications 1 à 5, **caractérisé en ce que** la partie inclinée (9) présente une longueur axiale (l), et le rapport entre la longueur axiale (l) de la partie inclinée (9) et l'épaisseur de paroi (t1) de la paroi (3) du profilé de torsion (1) est compris entre 1:1 et 2:1.

7. Essieu arrière à traverse de torsion selon l'une quelconque des revendications 2 à 6, **caractérisé en ce que** la surface de butée (12) présente une largeur (b) mesurée perpendiculairement à l'axe longitudinal (L) de la paroi (3) du profilé de torsion (1), et le rapport entre la largeur (b) de la surface de butée (12) et l'épaisseur de paroi (t1) de la paroi (3) du profilé de torsion (1) est compris entre 1:3 et 1:6.

8. Essieu arrière à traverse de torsion selon l'une quelconque des revendications 1 à 7, **caractérisé en ce que** la partie inclinée (9) est prévue dans une section longitudinale (15) partant de l'extrémité libre d'une branche (13) du profilé de torsion (1).
